# EUROPEAN PATENT SPECIFICATION

(11) **EP 0 587 096 B1**
(45) Date of publication and mention of the grant of the patent: **08.03.2000**
(21) Application number: 93114291.3
(22) Date of filing: 06.09.1993
(51) Int. Cl.: G03B 17/24

(54) **Camera equipped with data imprinting device**
Kamera, die mit einer Vorrichtung zum Aufbelichten von Daten ausgestattet ist
Caméra ayant un dispositif d'impression photographique des données

(30) Priority: 08.09.1992 JP 26549892; 11.09.1992 JP 24358492
(43) Date of publication of application: 16.03.1994
(73) Proprietor: NIKON CORPORATION, Tokyo (JP)
(72) Inventor: Machida, Kiyosada, Urawa-shi, Saitama-ken (JP); Soshi, Isao, Shibuya-ku , Tokyo (JP); Miyamoto, Hidenori, Urayasu-shi, Chiba-ken (JP)
(74) Representative: Rauh, Helga

(56) References cited:
- DE-A- 3 435 309
- US-A- 4 101 912
- US-A- 4 994 830
- PATENT ABSTRACTS OF JAPAN vol. 15, no. 156 (P-1192)18 April 1991 & JP-A-03 025 426 ( SEIKO EPSON ) 4 February 1991
- PATENT ABSTRACTS OF JAPAN vol. 16, no. 159 (P-1339)17 April 1992 & JP-A-04 009 023 ( RICOH ) 13 January 1992
- PATENT ABSTRACTS OF JAPAN vol. 15, no. 88 (P-1174)4 March 1991 & JP-A-02 304 538 ( CANON ) 18 December 1990

## Description

### BACKGROUND OF THE INVENTION

This invention relates to a camera having a data imprinting device for imprinting data, such as a date, on photographic film. More particularly, the invention relates to a camera capable of imprinting data from the inside of a camera body, applicable for both left and right-side loading cameras.

Conventional cameras having internal data imprinting devices, for example as disclosed in Japanese Laid-Open Patent Publication No. 2-304538, are equipped with a substrate positioned exterior to a spool chamber and a film cartridge chamber. A block of light emitting elements is mounted on the substrate. The light emitting elements are driven by a driver circuit to turn on and off as the film is transported, at timings, and in sequence to imprint the desired data in a manner similar to a dot matrix printer.

The block of light emitting elements is disposed in a rectangular space extending parallel to the photographic optical axis between a dark chamber and a spool chamber of the camera. An optical illumination system in the rectangular space, directs light from the light emitting elements to the photosensitive surface of a film.

Dimensions of the spool chamber and the dark chamber of a camera are dictated by film size. Thus extra space is required to house the light emitting element block between the spool chamber and the dark chamber. In a camera as described above, the spool chamber, the imprinting optical path and the photographic lens-barrel are arranged linearly parallel to the plane of the aperture. Therefore, such a camera incorporating the elements side by side in a simple arrangement inevitably has greater body width and depth due to the space occupied by the optical path than is the case with a conventional camera wherein data is imprinted from the back cover of the camera.

Other embodiments of the prior art employ a block of light emitting elements disposed above a dark chamber, behind a block of autofocusing (AF) light emitting elements.

Disposing the light emitting element block above the dark chamber and behind the AF light emitting element block, tends to make the camera bulky, because such a configuration necessitates additional space which increases the width of the camera body.

In addition, when the light emitting element block is disposed behind the AF light emitting element block, the depth of the space necessary to include both the light emitting element block and the AF light emitting element block is greater than the depth required for disposition of the photographic lens and the dark chamber alone. As a result, the dimensions of camera body must be increased.

### OBJECTS AND SUMMARY OF THE INVENTION

The present invention is defined in claim 1.

It is an object of the present invention to provide a camera equipped with a data imprinting device which overcomes the drawbacks of the prior art.

It is a further object of the invention to provide a data imprinting device which is disposed inside the camera body without increasing the width or the depth of the camera.

It is a further object of the present invention to provide these features in either a left or right side loading camera.

Briefly stated, the present invention provides a camera which incorporates at least part of its data imprinting elements for imprinting data within a picture image of a film, in normally unused dead space, without increasing the external dimensions of the camera. The normally unused dead space includes a substantially triangular space defined by a curved wall of the spool chamber, a portion of the back surface of the camera body, and a wall of the dark chamber. Light emitting elements and a driver circuit are mounted on the lower surface of a data imprinting substrate which is a separate unit from the main substrate of the camera. The driver circuit is located above the upper surface of the spool chamber.

A data imprinting device includes a block of light emitting elements for imprinting data on a photosensitive surface of a film, means for driving the light emitting elements and an imprinting optical system for focusing light emitted from the light emitting elements onto the photosensitive surface of the film. The light emitting elements and the driving means are disposed inside the camera body, above the upper surface of a spool chamber, mounted on the lower surface of a data imprinting substrate formed as a separate unit from the main substrate of the camera. A guide wall serving as one of the film guiding members for the sake of automatic loading of the photographic film is disposed in a substantially triangular space defined by a surface of a curved wall of the spool chamber and a portion of the back surface of the camera body, which is an extension of the plane of the aperture. At least a part of the data imprinting device is disposed in the triangular space behind the guide wall.

According to an embodiment of the invention, there is a camera comprising: a camera body, light emitting means and an imprinting optical system respectively disposed at the upper part of the camera body and in a substantially triangular space behind the guide wall, at least one data window through which illuminating light from the imprinting optical system passes formed in the rear end of the camera body, wherein illuminating light from the light emitting means is directed by the optical system in a direction perpendicular to the photographic film and is focused, through the data window, onto the photographic film.

According to another embodiment of the invention, the light emitting means and the optical system are disposed in a substantially triangular space behind the guide wall, and at least one data window to allow illuminating light from the optical system to pass therethrough is formed in the rear end of the camera body so that illuminating light from the light emitting means passes through the optical system and the data window and is focused on the photographic film.

According to yet another embodiment of the invention, the light emitting means, the optical system and the data window are provided at either or both positions for the full size photograph format and the panorama size format.

According to yet another feature of an embodiment of the invention, the light emitting means, the optical system and the data window for the full size format are disposed so as to vertically and respectively aligned with the light emitting means, the optical system and the data window for the panorama size format.

According to still another embodiment of the invention, there is provided a light emitting means, means for driving the light emitting means, an imprinting optical means for focusing light emitted from said light emitting means on a photosensitive surface of a film, the light emitting means and driving means being mounted on at least one data imprinting substrate which is formed as a separate unit from a main substrate of said camera and said driving means being disposed above a spool chamber within said camera.

A camera for imprinting data on a film comprising: a light emitting means, means for driving the light emitting means means for directing and focusing light emitted from the light emitting means on a surface of the film, a main substrate in the camera, a data imprinting substrate, the light emitting means and the means for driving being mounted the data imprinting substrate, the data imprinting substrate being a separate unit from a main substrate, and the means for driving being disposed above a spool chamber within the camera.

According to a feature of the invention, there is provided a camera comprising: a camera body, a dark chamber in the camera body, an aperture, means for exposing a film in the dark chamber to light admitted through the aperture, a spool chamber, means for moving the film into the spool chamber after exposure thereof, a light emitting means, an imprinting optical means, the imprinting optical means including means for directing and focusing light emitted from the light emitting means onto a surface of the film, the spool chamber having a curved wall a back surface of the camera body, the dark chamber including a dark chamber wall, a portion of the curved wall, a portion of the back surface, and a portion of the dark chamber wall defining a substantially triangular space, and at least a part of the light emitting means and the imprinting optical means being disposed within the substantially triangular space.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is a transverse cross section, taken along the line I-I in Fig 6, depicting a spool chamber and its vicinity of a first embodiment of a right-side loading camera equipped with a data imprinting device according to the present invention.
Fig. 2 is a transverse cross section of the right-side loading camera of Fig. 5, taken in a direction indicated by arrow II shown in Fig.5.
Fig. 3 is a perspective view of the right-side loading camera of Fig.5.
Fig. 4 is a transverse cross section, taken along the line IV-IV in Fig 9, depicting a spool chamber and its vicinity of a second embodiment of a right-side loading camera equipped with a data imprinting device according to the present invention.
Fig. 5 is a transverse cross section of the right-side loading camera of Fig. 8, taken in a direction indicated by arrow V shown in Fig. 8.
Fig. 6 is a transverse cross section, taken along the line VI-VI in Fig 11, depicting a spool chamber and its vicinity of a third embodiment of a right-side loading camera equipped with a data imprinting device according to the present invention.
Fig. 7 is a transverse cross section of the right-side loading camera of Fig. 10, taken in a direction indicated by arrow VII shown in Fig. 6.
Fig. 8 is a perspective view of a rear portion of a camera showing an embodiment of the present invention, in a left-side loading camera.
Fig. 9 is a transverse cross section of the left-side loading camera of Fig. 8.
Fig. 10 is a top view of the left-side loading camera of Fig. 8.
Fig. 11 is a front view of the left-side loading camera of Fig. 8.

### DETAILED DESCRIPTION OF THE PREFERRED EMBODIMENT

Before describing the present invention in detail, it should be noted that the features set forth may be utilized in either a right or left-side loading camera. There are, however, special considerations which must be addressed in the placement of guide rollers in the case of right-side loading cameras, as will be explained.

In the case of a left-side loading type camera, a film cartridge chamber is located at the left and a spool chamber at the right, as viewed from the rear of the camera. Film is loaded by inserting a film cartridge upside down into the cartridge chamber, with the tongue of the film at the lower part of the film. Consequently, film guide rollers at the lower part of the camera support the tongue during loading. Since data is generally imprinted on the film in the lower right part of the image from an aesthetic point of view, the imprinting position on a frame of a film loaded in a camera is in the upper part of the frame, because the image is inverted by the camera lens. No special placement of the guide roller is required since the optical recording means is disposed entirely above the roller, so there is no chance of the optical path being blocked.

In case of a right-side loading camera, however, a film cartridge chamber and a spool chamber are disposed at the right side and the left side respectively. Film is loaded by inserting a film cartridge right side up into the cartridge chamber, with the tongue of the film at the upper part of the film. Therefore, film guide rollers must be disposed at the upper part of the camera to support the tongue. In such a camera, a space allowing the guide rollers to retreat therein when the diameter of film wound around the spool is at or near its maximum diameter would require positioning the rollers directly in the optical path of the optical recording means. Therefore, in the case of a right-side loading, the guide rollers must be positioned away from the optical path.

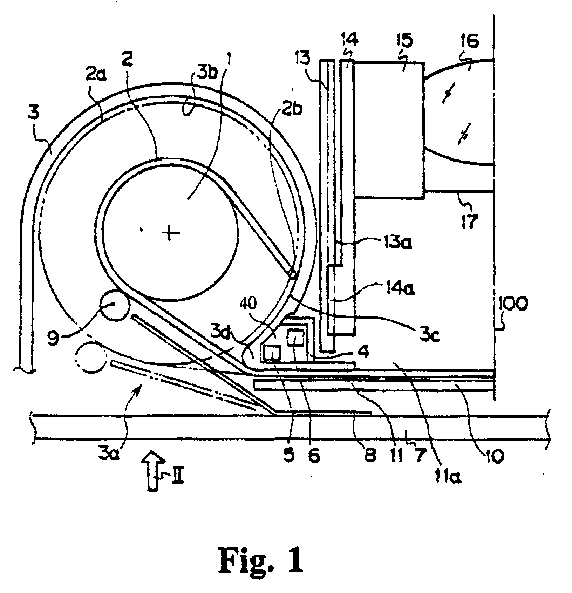

Referring now to the figures, and in particular Figs. 1-5, a first embodiment of the present invention is a spool-driven right-side loading camera equipped with a data imprinting device. A rotary ring 13 is rotatably supported at the approximate center of the camera body, with a female helicoid 13a around the inner surface of rotary ring 13. A male helicoid 14a around an outer surface of a lens barrel 14 engages female helicoid 13a so that lens barrel 14 is capable of moving forward or backward along an optical axis 100 when rotary ring 13 is rotated in a positive or reverse direction. Lens barrel 14 supports a shutter mechanism 15 and a photographic lens 16. Shutter mechanism 15 opens and closes a sector 17.

An aperture 11a in a back surface 11 of the camera body allows a photographic film 2 to be exposed to light imaged thereon through photographic lens 16. A pair of inner rails 12 and a pair of outer rails 18 are disposed above and below aperture 11a. Only the upper rail of each pair of rails is shown in the drawings. Inner rails 12 are set somewhat forward (about 0.2 mm) of back surface 11 of the camera body, and outer rails 18 are set farther forward than inner rails 12.

A back cover 7 encloses a rear of the camera body. Back cover 7 includes a pressure plate 10 thereon, biased in the forward direction by an elastic member (not shown). Film 2 is pressed against inner rails 12 and outer rails 18 by pressure plate 10.

A spool chamber 3 is located at the left within the camera body. A spool 1 is disposed at the approximate center of spool chamber 3. When spool 1 rotates clockwise, as represented in Fig. 1, film 2 is automatically taken up around spool 1.

A side of spool chamber 3 is open to back cover 7. The open side of spool chamber 3 is represented as an aperture 3a in the drawings. Spool chamber 3 has a curved inner wall 3b for containing film 2 therein and a guide wall 3c integrally connected to inner wall 3b. An end of guide wall 3c is bent to form a folded portion 3d.

A substantially triangular space 40 is formed by guide wall 3c of curved wall 3b and back surface 11 of the camera body. Guide wall 3c serves as a film guide member for automatic loading of film 2. Other film guide members include a leaf spring 8 and a roller 9.

A base end of leaf spring 8 is affixed to back cover 7 do retain a remainder of leaf spring 8 at aperture 3a of spool chamber 3. A roller 9 at the other end of leaf spring 8 is biased by leaf spring 8 towards the center of spool 1.

A maximum diameter circle 2a, shown by a double dashed line in Fig. 1, indicates the maximum diameter to which film 2 may be wound around spool 1. The positions of leaf spring 8 and roller 9, when the diameter of film 2 is at the maximum diameter 2a are also shown by double dashed lines.

Guide wall 3c of spool chamber 3 has the same function as a film guide roller of a camera of the positive loading type. More precisely, when spool 1 rotates after a tongue 2b of film 2 is inserted into spool chamber 3, film 2, which is pressed by roller 9 located at the front end of leaf spring 8, moves along inner wall 3b of spool chamber 3. As tongue 2b advances, guided by guide wall 3c, film 2 continues moving until tongue 2b slips between the back surface of film 2 and spool 1, and is taken up around spool 1.

As described above, guide wall 3c serves the same function as a film guide roller of a left-side loading camera. In the prior art, the film guide roller is disposed in a space corresponding to space 40 defined by curved inner wall 3b of spool chamber 3 and the plane defined by an extension of the plane of aperture 11a. However, as has already been described, by utilizing the guide wall 3c and locating the roller exterior to the space 40, the present embodiment has universal application for both left and right-side loading cameras.

Prism lenses 5 and 6 are disposed behind guide wall 3c. Prism lens 5 is employed for imprinting data in a panorama size format. Prism lens 6 is employed for imprinting data in a full size format.

A light shielding wall 4 closes the remainder of triangular space 40 to block light for data imprinting from prism lenses 5 and 6, that would otherwise shine directly into aperture 11a and thereby undesirably expose the film.

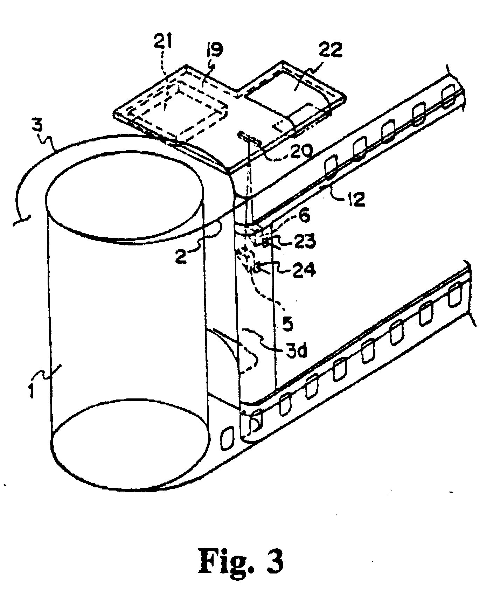

As best shown in Fig. 3, illuminating light from data imprinting prisms 5 and 6 is reflected onto photographic film 2 through data windows 23 and 24, respectively in back surface 11 of the camera body. Data window 23 is used for the panorama size format. Data window 24 is used for the full size format. Data windows 23 and 24 are alternately opened and occluded when mode switching between the panorama size format and the full size format.

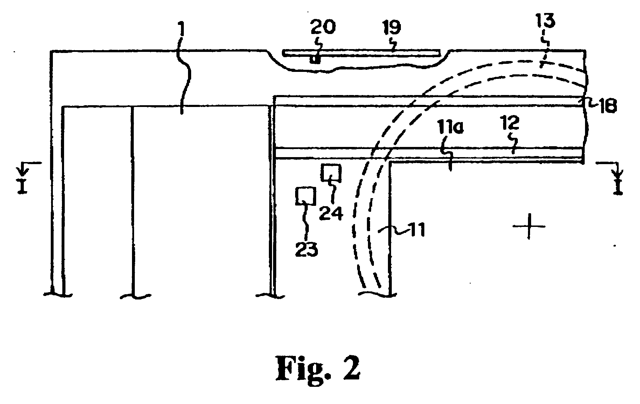

As shown in Figs. 2 and 3, an imprinting substrate 19 mounted on the camera body is connected through a flexible printed board 22 to a CPU (not illustrated) in the camera body.

A plurality (seven in case of the preferred embodiment) of LEDs 20 are arrayed in a line under imprinting substrate 19 parallel to the optical axis of the camera . The LEDs 20 are turned on or off under the control of an IC 21 on imprinting substrate 19.

A camera equipped with a data imprinting device according to the present embodiment includes a film-motion detection means (not shown) for detecting the distance travelled by film 2 and the travelling speed while spool 1 rotates clockwise to take up film 2 after each exposure of the film.

Light beams emitted by data imprinting LEDs 20, under control of IC 21 and the detection means, are refracted 90 degrees by prism lens 5 or 6 and impinged on film 2 through data window 23 or 24, so that a pattern of data from LEDs 20 is imprinted on film 2 in dot matrix form.

The optical system of the data imprinting device of the present embodiment is disposed in space 40 defined by the plane extended from aperture 11a, guide wall 3c of spool chamber and rotary ring 13, which is the outermost member of lens barrel 14. Effective use of this dead space, that has not heretofore been utilized in the configuration of a conventional camera, makes imprinting of data by a device incorporated in a camera body without increasing the dimension of the camera either in width or in depth.

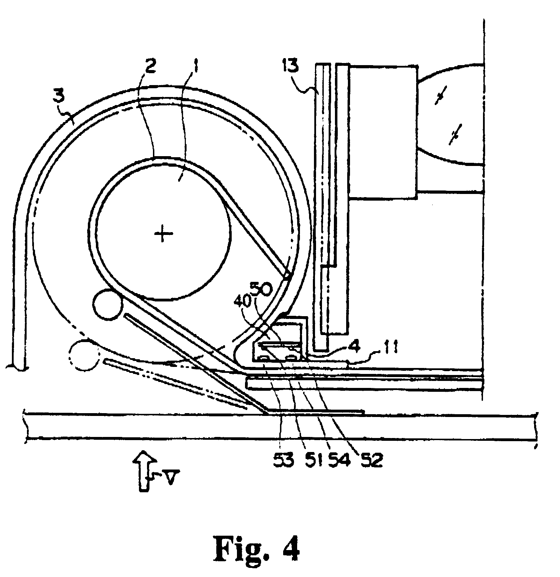

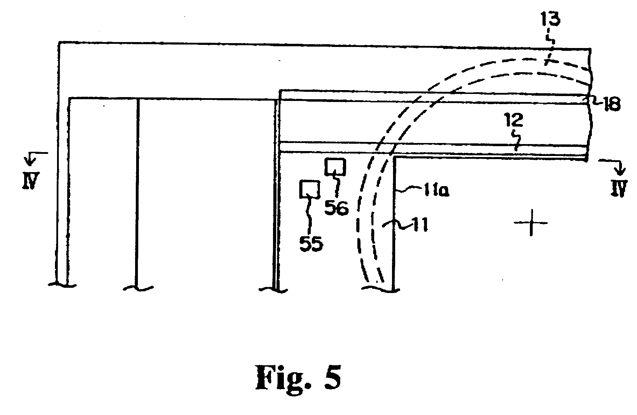

Referring now to Figs. 4 and 5, a second embodiment of the present invention has features similar to those of the first embodiment described above, except as noted herein. An LED imprinting substrate 50 is disposed directly in space 40. LEDs 51 mounted on LED substrate 50 produce imprinting data for the panorama format. LEDs 52, also mounted on substrate 50 produce imprinting data for the full size format. Light beams emitted from LEDs 51 and 52 reach film 2 respectively through lenses 53 and 54 and then through data windows 55 and 56. Data windows 55 and 56 are respectively alternately opened and occluded by mode switching between the panorama size format and the full size format.

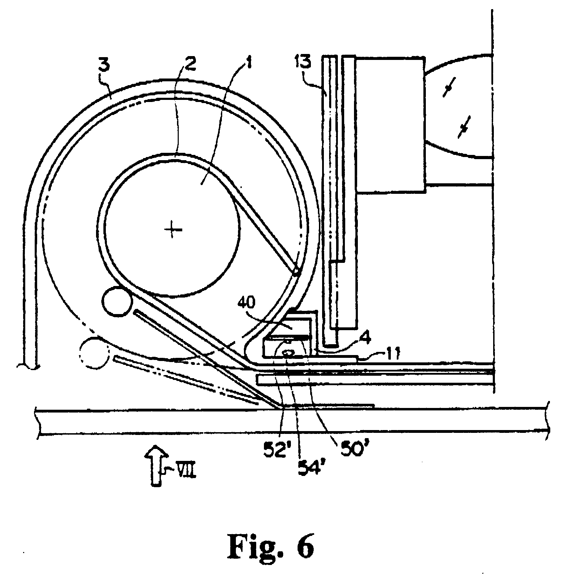

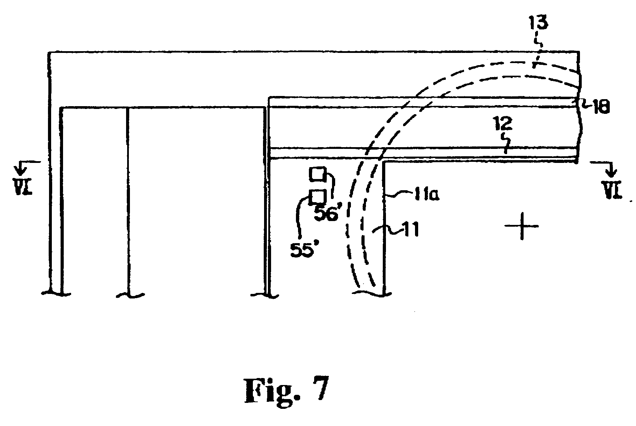

Referring now to Figs. 6 and 7, a third embodiment of the invention is shown, in which portions having the same function as corresponding portions in the second embodiment are represented by the same numeral identifications with the addition of a prime (').

LEDs 51' and 52' are mounted in space 40 in a single vertical line on an imprinting substrate 50' (LEDs 52' are hidden by LEDs 51 in Fig. 6). Lenses 53' and 54' are aligned in a single vertical line in space 40 (lens 53' is hidden by lens 54' in Fig. 6). Data windows 55' and 56' are also vertically aligned.

The location of imprinting substrate 50 (or 50') directly in space 40 as in the second (or third) embodiment improves the space efficiency of a camera. The third embodiment further improves the space efficiency by arranging corresponding components for the panorama format and the full size format respectively in a single vertical line.

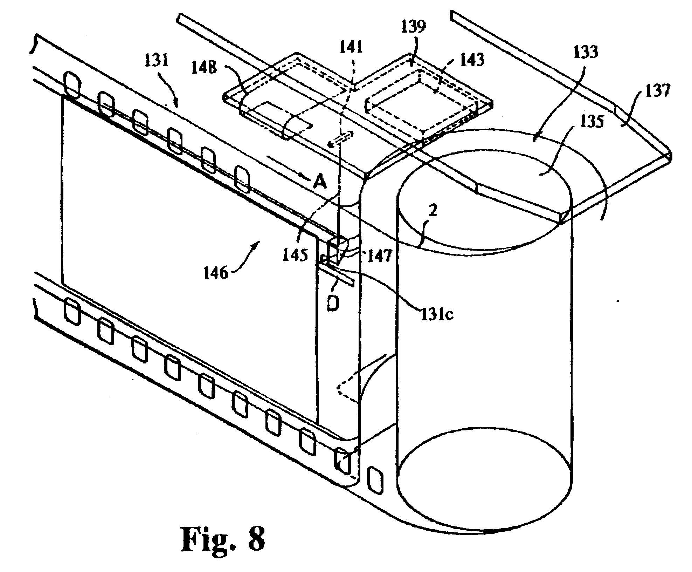

Referring now to Figs. 8-11, a fourth embodiment is a left-side loading camera having a data imprinting function according to the present invention. A spool chamber 133 is at one end of camera body 131. A spool 135 for taking up a film 2 in the direction represented by an arrow A is disposed in spool chamber 133.

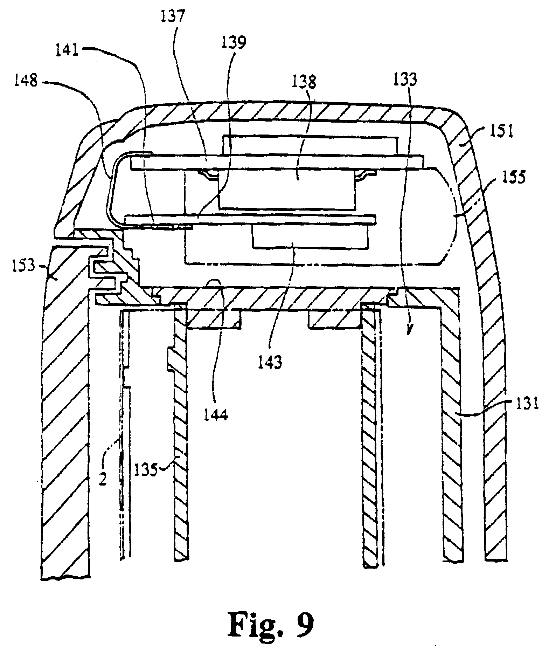

As shown best in Fig.9, a main substrate 137 is disposed above camera body 131 of the camera. A CPU 138 under substrate 137 controls the overall functions of the camera. A data imprinting substrate 139 is mounted below main substrate 137.

A plurality of light emitting elements 141 are disposed on the lower surface of data imprinting substrate 139. Light emitting elements 141 consist of a plurality of LEDs (light emitting diodes) arranged in a single line. A driver circuit 143 controls the timed energization of light emitting elements 141. Driver circuit 143 is positioned above an upper surface 144 of the spool chamber. Data imprinting substrate 139 and main substrate 137 are electrically interconnected by a connecting terminal 148.

Referring specifically to Fig. 8, an imprinting optical path 145 below light emitting elements 141 of camera body 131 contains an imprinting optical system member 147. An aperture 131c opens toward film 2 at a side of imprinting optical system member 147 of camera body 131. An AF light emitting block 155 is disposed above a photographic lens 157

Referring to Fig.9, a cover member 151 covers a major portion of the exterior of the camera. A back cover 153 openably seals a back door in over member 151.

Referring specifically to Fig.8, light from light emitting elements 141 passes through imprinting optical system member 147 and then through aperture 131c. The light is focused on the surface of a film so that data, such as a date, is imprinted as photographic film 2 travels a range D within a picture image.

Light emitting elements 141 and driver circuit 143 are mounted on the lower surface of data imprinting substrate 139. Data imprinting substrate 139 is formed as a separate unit from main substrate 137. Driver circuit 143 is located above upper surface 144 of spool chamber 133. This positioning of light emitting elements 141 avoids the need to increase in width or depth of the camera body, in a manner similar to the principles set forth in the description of the first embodiment.

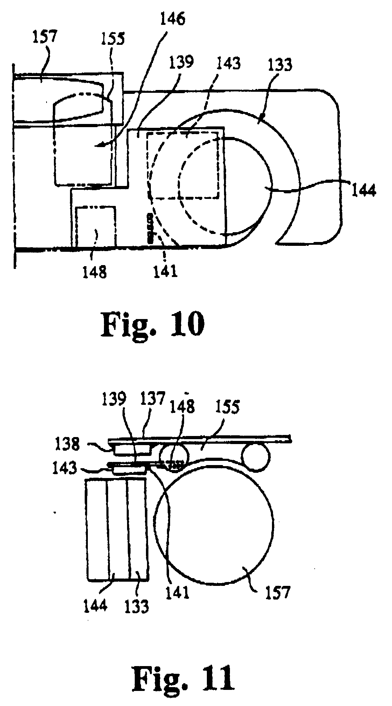

Referring to Fig. 11, AF light emitting block 155 in a typical configuration of a camera is disposed above photographic lens 157. If an attempt is made to reduce the height of spool chamber 133, dead space is produced because of the disposition of AF light emitting block 155.

Therefore, by disposing driver circuit 143, which occupies the largest part of data imprinting substrate 139, above spool chamber 133, the present invention makes effective use of the dead space, consequently making the camera itself compact.

Referring to Fig. 10, connecting terminal 148 is contained in a naturally occurring space formed behind AF light emitting block 155 in a normal configuration of a camera. This effectively utilizes this additional dead space, further contributing to the compactness of the camera.

The features set forth in the first embodiment of the present invention, which utilize space 40 for providing a data imprinting optical path for the transmission of light from light emitting elements 20, as shown in Fig. 3, may be utilized just as effectively in the fourth embodiment shown in Fig. 10, since the light emitting elements 141 are appropriately positioned for this geometry.

As described above, a camera having a data imprinting function according to the present invention is advantageous in that the light emitting elements are incorporated without increasing the dimensions of the camera body, because the light emitting elements and their driving means are mounted on the lower surface of the data imprinting substrate formed as a separate unit from the main substrate, so that the driving means is located above the spool chamber.

For example, since a camera according to any of the described embodiments does not require space for a film guide member to retreat into, the entire vertical range of space 40 is available for data imprinting apparatus. An optical system to direct light to either the upper or the lower part of the camera may be used, if desired, to position data imprinting in either location, without departing from the scope of the present invention. Similarly, means for allowing data to be selectively imprinted at an upper and a lower part of a vertically long frame of an image, when holding a camera vertically, should be considered to fall within the scope of the invention.

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. A camera comprising a camera body (131) having a dark chamber (146);
a spool chamber (133) in said camera body (131) substantially perpendicular to a top and bottom of said camera body (131);
at least one light emitting element (141);
an imprinting optical group (141, 147) including a plurality of optical prisms (147) for directing and focusing data imprinting light emitted from said at least one light emitting element (141) onto a surface of a film (F);
said spool chamber (133) including a curved wall;
said camera body (131) having a back surface parallel to said film (F);
said dark chamber (146) including a dark chamber wall;
said curved wall, said back surface, a portion of said top of said camera body, a portion of said bottom of said camera body, and said dark chamber wall defining a space (40) shaped as a substantially triangular prism;
a driving circuit (143) for driving said at least one light emitting element (141); and
at least one data imprinting substrate (139),
characterized in that:
said at least one light emitting element (141) and said driving circuit (143) are mounted on said at least one data imprinting substrate (139);
said at least one light emitting element (141) and said imprinting optical group (141, 147) are disposed adjacent said spool chamber (133) and entirely within said space (40);
said camera includes a main substrate (137) being a separate unit from said data imprinting substrate (139); and
said driving circuit (143) is disposed between an end of said spool chamber (133) and said top of said camera body (131).

2. The camera according to claim 1, wherein:
said camera is of a right-side loading type; said camera includes a film cartridge chamber for containing said film (F); and
said cartridge chamber, an image aperture, and said spool chamber (133) respectively being disposed at right, center and left parts of said camera body as viewed from said back surface thereof.

3. A camera according to claim 2, wherein:
said at least one light emitting element (141) and said imprinting optical group (141, 147) are respectively disposed at said portion of said top of said camera body (131) and within said space.

4. The camera according to claim 2, wherein:
said data imprinting light emitted from said at least one light emitting element (141) is directed by said plurality of optical prisms (147) in a direction substantially perpendicular to said film (F);
at least one data window (131c) through which said light passes is formed in said back surface; and
said plurality of optical prisms (147) focusses said data imprinting light onto said film (F) through said at least one data window (131c).

5. The camera according to claim 4, wherein:
said at least one light emitting element (141), said imprinting optical group (141, 147), and said at least one data window (131c) are disposed at a position for recording data on a full size format frame.

6. The camera according to claim 4, wherein:
said at least one light emitting element (141), said imprinting optical group (141, 147), and said at least one data window (131c) are disposed at a position for recording data on a panorama size format frame.

7. The camera according to claim 4, wherein:
said at least one light emitting element (141), said imprinting optical group (141, 147), and said at least one data window (131c) are disposed at respective positions for selectively recording data on both a full size and panorama format frame.

8. The camera according to claim 5, wherein:
said at least one light emitting element (141), said imprinting optical group (141, 147), and said at least one data window (131c) disposed at said position for recording data on said full size format are vertically and respectively substantially aligned with said at least one light emitting element (141), said imprinting optical group, and said at least one data window disposed at said position for recording data on said panorama size format.

9. The camera according to claim 1, wherein:
said camera is of a left-side loading type;
said camera includes a film cartrige chamber for containing said film (F); and
said cartridge chamber, an image aperture, and said spool chamber (133) are respectively disposed at left, center and right parts of said camera body (131) as viewed from said back surface thereof.

## Patentansprüche

1. Kamera, bestehend aus einem Kameragehäuse (131) mit einer Dunkelkammer (146);
einer Spulenkammer (133) in dem Kameragehäuse (131), die im wesentlichen senkrecht zu einer Oberseite und einem Boden des Kameragehäuses (131) ausgerichtet ist;
wenigstens einem lichtemittierenden Element (141);
einer optischen Druckergruppe (141, 147) mit einer Mehrzahl optischer Prismen (147) die datendruckendes Licht, das von dein wenigstens einen lichtemittierenden Element ausgesandt wird, auf die Oberfläche eines Films (F) leitet und bündelt
wobei die Spulenkammer (133) eine gekrümmte Wand besitzt;
wobei das Kameragehäuse (131) eine hintere Fläche besitzt, die parallel zu dem Film (F) liegt;
wobei die Dunkelkammer (146) eine Dunkelkammerwand besitzt;
wobei die gekrümmte Wand, die hintere Fläche, ein Teil der Oberseite des Kameragehäuses, ein Teil des Bodens des Kameragehäuses und die Durkelkammerwand einen Raum (40) bilden, der als im wesentlichen dreieckiges Prisma geformt ist;
einem Steuerschaltkreis (143) um das wenigsten eine lichtemittierende Element (141) zu steuern; und
wenigstens einem datendruckenden Träger (139);
**dadurch gekennzeichnet**,
daß das wenigstens eine lichtemittierende Element (141) und der Steuerschaltkreis (143) auf dem wenigstens einen datendruckenden Träger (139) montiert sind, daß das wenigstens eine lichtemittierende Element (141) und die druckende optische Gruppe (141, 147) neben der Spulenkammer (133) und vollständig in dem Raum (40) angeordnet sind;
daß die Kamera einen Hauptträger (137) aufweist, der eine von dem datendruckenden Träger (139) getrennte Einheit ist; und
daß der Steuerschaltkreis (143) zwischen einem Ende der Spulenkammer (133) und der Oberseite des Kameragehäuses (131) angeordnet ist.

2. Kamera nach Anspruch 1, wobei:
die Kamera von der Art ist, die von rechts zu laden ist;
die Kamera eine Filmkammer, die den Film (F) enthält, aufweist; und
die Filmkammer, eine Belichtungsöffnung und die Spulenkammer von der hinteren Fläche der Kamera aus gesehen jeweils rechte, mittige und linke Teile des Kameragehäuses sind.

3. Kamera nach Anspruch 2, wobei:
das wenigstens eine lichtemittierende Element (141) und die druckende optische Gruppe (141, 147) jeweils an dem Bereich der Oberseite des Kameragehäuses (131) und in dem Raum angeordnet sind.

4. Kamera nach Anspruch 2, wobei:
das datendruckende Licht, das von dem wenigstens einen lichtemittierenden Element (141) ausgesandt wird durch die Mehrzahl optischer Prismen (147) in eine Richtung geleitet wird, die im wesentlichen senkrecht zu dem Film (F) ausgerichtet ist;
wenigstens ein Datenfenster (131 c) durch die das Licht geht in der hinteren Fläche geformt ist; und
die Mehrzahl optischer Prismen (147) das datendruckende Licht durch das wenigstens eine Datenfenster (131c) auf den Film (F) bündeln.

5. Kamera nach Anspruch 4, wobei:
das wenigstens eine lichtemittierende Element (141), die druckende optische Gruppe (141, 147) und das wenigstens eine Datenfenster in einer Position angeordnet sind, um Daten auf einem Vollformatrahmen aufzuzeichnen.

6. Kamera nach Anspruch 4, wobei:
das wenigstens eine lichtemittierende Element (141), die druckende optische Gruppe (141, 147) und das wenigstens eine Datenfenster (131c) in einer Position angeordnet sind, um Daten auf einem Panoramaformatrahmen aufzuzeichnen.

7. Kamera nach Anspruch 4, wobei:
das wenigstens eine lichtemittierende Element (141), die druckende optische Gruppe (141, 147) und das wenigstens eine Datenfenster (131c) jeweils in einer Position angeordnet sind, um Daten wahlweise auf einem Vollformatrahmen oder auf einem Panoramaformatrahmen aufzuzeichnen.

8. Kamera nach Anspruch 5, wobei:
das wenigstens eine lichtemittierende Element (141), die druckende optische Gruppe (141, 147) und das wenigstens eine Datenfenster (131c, die an der Position angeordnet sind um Daten auf einem Vollformat aufzuzeichnen vertikal zu und jeweils im wesentlichen ausgerichtet mit dem wenigstens einen lichtemittierenden Element (141), der druckenden optischen Gruppe und dem wenigstens einen Datenfenster, die in der Position angeordnet sind, um Daten auf dem Panoramaformat aufzuzeichnen, sind.

9. Kamera nach Anspruch 1, wobei:
die Kamera von der Art ist, die von links zu laden ist;
die Kamera eine Filmkammer aufweist, um den Film (F) aufzunehmen; und
die Filmkammer, eine Belichtungsöffnung und die Spulenkammer von der hinteren Fläche aus gesehen jeweils linke, mittige und rechte Teile des Kameragehäuses (131) sind.

## Revendications

1. Appareil photographique comprenant un boîtier (131) d'appareil photographique comportant une chambre noire (146).
une chambre de bobinage (133) dans ledit boîtier (131) d'appareil photographique essentiellement perpendiculaire à un sommet et à une base dudit boîtier (131) d'appareil photographique ;
au moins un élément (141) émetteur de lumière ;
un groupe (141, 147) optique d'impression comprenant une pluralité de prismes optiques (147) pour diriger et focaliser une lumière d'impression de données émise à partir d'au moins l'un desdits éléments émetteurs de lumière (141) sur une surface d'un film (F);
ladite chambre de bobinage (133) comprenant une paroi incurvée;
ledit boîtier (131) d'appareil photographique comportant une surface arrière parallèle audit film (F) ;
ladite chambre noire (146) comprenant une paroi de chambre noire ;
ladite paroi incurvée, ladite surface arrière, une partie dudit sommet dudit boîtier d'appareil photographique, une partie de ladite base dudit boîtier d'appareil photographique, et ladite paroi de chambre noire définissant un espace (40) conformé essentiellement comme un prisme triangulaire ;
un circuit d'activation (143) pour activer ledit au moins un élément émetteur de lumière (141) ; et
au moins un substrat (103) d'impression de données,
caractérisé en ce que :
ledit au moins un élément (141) émetteur de lumière et ledit circuit d'activation (143) sont montés sur ledit au moins un substrat (139) d'impression de données ;
ledit au moins un élément (141) émetteur de lumière et ledit groupe optique d'impression sont disposés adjacent à ladite chambre (133) de bobinage et entièrement à l'intérieur dudit espace (40) ;
ledit d'appareil photographique comprend un substrat principal (137) qui est une unité séparée dudit substrat (139) d'impression de données ; et
ledit circuit d'activation (143) est disposé entre une extrémité de ladite chambre de bobinage (133) et ledit sommet dudit boîtier (131) dudit appareil photographique.

2. Appareil photographique selon la revendication 1, dans lequel :
l edit appareil photographique est du type à chargement côté droit;
l edit appareil photographique comprend une chambre pour la cartouche du film destinée à contenir ledit film (F) ; et
l adite chambre pour la cartouche, l'ouverture de prise de vue, et ladite chambre de bobinage (133) sont disposées respectivement à droite, au centre et à gauche dudit boîtier de l'appareil photographique lorsque l'on regarde depuis sadite surface arrière.

3. Appareil photographique selon la revendication 2, dans lequel :
ledit au moins un élément émetteur de lumière (141) et le ledit groupe optique d'impression (141, 147) sont respectivement disposés dans ladite partie dudit sommet dudit boîtier (131) de l'appareil photographique et à l'intérieur dudit espace.

4. Appareil photographique selon la revendication 2, dans lequel :
ladite lumière d'impression de données émise par ledit au moins un élément (141) émetteur de lumière est dirigée par ladite pluralité de prismes optiques (147) dans une direction essentiellement perpendiculaire audit film (F) ;
au moins une fenêtre de données (131c), à travers laquelle passe ladite lumière, est formée dans ladite surface arrière; et
ladite pluralité de prismes optiques (147) focalise ladite lumière qui imprime les données sur ledit film (F) à travers ladite au moins une fenêtre de données (131c).

5. Appareil photographique selon la revendication 4, dans lequel :
ledit au moins un élément (141) émetteur de lumière, ledit groupe optique d'impression (141, 147), et ladite au moins une fenêtre de données (131c) sont disposés dans une position pour enregistrer les données sur une image plein format.

6. Appareil photographique selon la revendication 4, dans lequel :
ledit au moins un élément (141) émetteur de lumière, ledit groupe optique d'impression (141, 147), et ladite au moins une fenêtre de données (131c) sont disposés dans une position pour enregistrer les données sur une image au format panoramique.

7. Appareil photographique selon la revendication 4, dans lequel :
ledit au moins un élément émetteur de lumière (141), ledit groupe optique d'impression (141, 147) et ladite au moins une fenêtre de données (131c) sont disposés aux positions respectives pour enregistrer sélectivement des données à la fois dans une image plein format et dans une image au format panoramique.

8. Appareil photographique selon la revendication 5, dans lequel :
ledit au moins un élément émetteur de lumière (141), ledit groupe optique d'impression (141, 147), et ladite au moins une fenêtre de données (131c) disposés à ladite position pour l'enregistrement des données sur ledit format plein format sont alignés essentiellement verticalement et respectivement avec ledit au moins un élément émetteur de lumière (141), ledit groupe optique d'impression, et ladite au moins une fenêtre de données disposés dans ladite position pour l'enregistrement des données sur ledit format de dimension panoramique.

9. Appareil photographique selon la revendication 1, dans lequel :
ledit qu'appareil photographique est du type à chargement côté gauche ;
ledit appareil photographique comprend une chambre pour une cartouche du film pour contenir ledit film (F) ; et
ladite chambre pour la cartouche, une ouverture de prise de vue, et ladite chambre de bobinage (133) sont disposées respectivement à gauche, au centre et à droite dudit boîtier (131) de l'appareil photographique lorsque l'on regarde depuis sadite surface arrière.
